# EUROPÄISCHE PATENTSCHRIFT

(11) **EP 3 067 607 B1**
(45) Veröffentlichungstag und Bekanntmachung des Hinweises auf die Patenterteilung: **14.02.2018**
(21) Anmeldenummer: 16158890.0
(22) Anmeldetag: 07.03.2016
(51) Int. Cl.: F16L 1/24, F16L 9/14

(54) **ROHRLEITUNG AUS STAHL MIT BALLASTUMMANTELUNG UND VERFAHREN ZUR HERSTELLUNG EINER SOLCHEN ROHRLEITUNG**
PIPE MADE OF STEEL WITH BALLAST SHEATH AND METHOD FOR PRODUCING SUCH A PIPE
CONDUITE EN ACIER COMPRENANT UNE ENVELOPPE DE BALLAST ET PROCEDE DE PRODUCTION D'UNE TELLE CONDUITE

(30) Priorität: 11.03.2015 DE 102015103582
(43) Veröffentlichungstag der Anmeldung: 14.09.2016
(73) Patentinhaber: Salzgitter Mannesmann Line Pipe Gmbh, 57074 Siegen (DE)
(72) Erfinder: KOCKS, Hans-Jürgen, 57258 FREUDENBERG (DE); WINKELS, Jörn, 59457 WERL (DE)
(74) Vertreter: Meissner, Peter E.

(56) Entgegenhaltungen:
- DE-A1- 2 616 340
- US-A- 3 955 600
- US-A- 3 985 848

## Beschreibung

Die Erfindung betrifft eine Rohrleitung aus Stahl mit Ballastummantelung zum Transport von flüssigen oder gasförmigen Medien gemäß dem Oberbegriff des Patentanspruches 1. Desweiteren betrifft die Erfindung ein Verfahren zur Herstellung einer solchen Rohrleitung nach dem Oberbegriff des Anspruchs 9. Dokument US3985848 zeigt eine Rohrleitung gemäß dem Oberbegriff des Anspruchs 1. Zu transportierende Medien können beispielsweise Wasser, Öl, Erdgas oder auch andere Medien sein. Die aus einzelnen zusammengesetzten Stahlrohren bestehenden Rohrleitungen mit einer Ballastummantelung werden zum Beispiel bei der Offshore Verlegung auf dem Meeresgrund verwendet. Dabei muss die Ballastummantelung die Auftriebskräfte kompensieren und zusätzlich müssen die Rohre vor mechanischer Beschädigung und Korrosion geschützt werden. Ein Korrosionsschutz ist notwendig, da Beschädigungen der Ballastummantelung bereits beim Transport und bei der Verlegung der Rohrleitung auftreten können, was unter Umständen zum späteren Durchkorrodieren des Stahlrohres und damit zur Undichtigkeit der Rohrleitung führen kann.
Bei der Herstellung der Stahlrohre für die Rohrleitung werden diese daher üblicherweise zunächst mit einer ein- oder mehrlagigen mehrere Millimeter dicken aufextrudierten thermoplastischen Kunststoffummantelung, zum Beispiel aus Polyethylen, Polypropylen, Epoxidharz oder Polyurethan, zum Schutz vor Korrosion versehen. Im Fall einer Ballastummantelung wird das Rohr anschließend mit einer zementbasierten üblicherweise aus Beton oder Mörtel bestehenden Ummantelung umhüllt, wobei die zementgebundene Schicht mit einer Bewehrung versehen wird. Als Material für die Bewehrung wird üblicherweise Stahl verwendet. Dabei wird die Dicke der Ballastummantelung und die erforderliche Bewehrung den statischen Erfordernissen der Rohrleitung im verlegten Zustand angepasst.
Nachfolgend wird der Begriff "Betonummantelung" auch für andere zementbasierte Mörtelsysteme als Ballastummantelungen verwendet.

Um die Kunststoffummantelung beim Anbringen der Bewehrung nicht zu beschädigen und eine Überdeckung der Bewehrung mit Beton sowie eine Verklammerung des Betons mit dem Rohr zu gewährleisten, ist es zum Beispiel aus der Offenlegungsschrift GB 2 264 128 A oder der Patentschrift US 1,080,532 bekannt, die Bewehrung an separaten auf der gesamten Rohroberfläche in definierten Abständen angeordneten Abstandshaltern anzubringen.

Mit diesen Abstandshaltern wird zwar eine Überdeckung der Bewehrung und eine Verklammerung des Betons mit dem Rohr gewährleistet, die Montage dieser Abstandshalter ist jedoch sehr zeitaufwändig und damit kostenintensiv und verteuert das Endprodukt. Zudem muss eine aufwändige Lagerhaltung für die Abstandshalter betrieben werden.

Aufgabe der Erfindung ist es daher, eine Rohrleitung aus Stahl mit Ballastummantelung, bestehend aus einer Kunststoffummantelung zum Korrosions- und/oder mechanischen Schutz und einer bewehrten Betonummantelung als Ballast zum Transport von flüssigen oder gasförmigen Medien anzugeben, bei der die Anordnung von Abstandshaltern für die Bewehrung auf der Oberfläche der einzelnen Rohre einfach und kostengünstig zu realisieren ist. Ebenso soll ein entsprechendes Herstellverfahren hierfür angeben werden.

Diese Aufgabe wird ausgehend vom Oberbegriff in Verbindung mit dem kennzeichnenden Teil des Patentanspruches 1 gelöst. Vorteilhafte Weiterbildungen sind Bestandteil von Unteransprüchen. Ein entsprechendes Herstellungsverfahren zur Erzeugung einer Rohrleitung mit einer Ballastummantelung wird in Anspruch 9 angegeben.

Nach der Lehre der Erfindung wird eine Rohrleitung aus Stahl mit Ballastummantelung, insbesondere zur Offshore Verlegung, für den Transport von flüssigen oder gasförmigen Medien bereitgestellt, wobei die einzelnen Rohre der Rohrleitung mit einer aufextrudierten ein- oder mehrlagigen thermoplastischen Kunststoffummantelung und einer bewehrten Betonummantelung als Ballast versehen sind und wobei die Bewehrung des Betons als Stahlgeflecht ausgebildet ist, welches sich zur Realisierung einer Betonüberdeckung auf mit auf der Kunststoffummantelung angebrachten Abstandshaltern abstützt und dadurch gekennzeichnet ist, dass die Abstandshalter nicht als separate Teile auf der Oberfläche der Kunststoffummantelung angebracht sondern als Teil der Kunststoffummantelung ausgebildet sind und während des Extrudierens erzeugt wurden.

Der große Vorteil der Erfindung besteht darin, dass keine separat auf der Rohroberfläche aufwändig zu montierenden Abstandshalter benötigt werden und dadurch ein kostenintensiver Arbeitsgang entfällt. Die Erfindung nutzt die aus Korrosionsschutzgründen notwendigerweise aufzubringende Kunststoffummantelung des Rohres, um die Abstandshalter aus dem Kunststoff der Ummantelung selbst zu formen. Dementsprechend wird die Herstellung der Rohre mit einer Ballastummantelung erfindungsgemäß durch ein Verfahren realisiert, bei dem die eine Betonüberdeckung der Bewehrung realisierenden Abstandshalter nunmehr im Zuge der Extrusion der Kunststoffummantelung durch eine entsprechende Profilierung des thermoplastischen Materials während der Extrusion erzeugt werden. Dies kann beispielsweise durch ein entsprechend ausgebildetes Extruderwerkzeug erfolgen.

Die so im Zuge der Extrusion erzeugten Abstandshalter können erfindungsgemäß über dem Umfang und der Rohrlänge gleichmäßig verteilt oder den jeweiligen Erfordernissen entsprechend angeordnet sein. Auch können die erforderlichen Abmessungen der Abstandshalter (Höhe, Länge, Breite bzw. Dicke) den Anforderungen entsprechend angepasst werden. Eine Anpassung kann dabei über entsprechend ausgebildete Extruderwerkzeuge erfolgen.

In einer vorteilhaften Ausbildung der Erfindung sind die Abstandshalter in Form eines T-Profils mit einem längs (bei Längsextrusion) oder radial (bei Querextrusion) zum Rohr sich erstreckenden Steg und einem als Auflagefläche für die Bewehrung dienenden Querteil ausgebildet. Diese T-Form bietet dem Beton eine ansonsten nicht gegebene Verklammerungsmöglichkeit mit dem Rohr bzw. der Ummantelung des Rohres. Über diese Verklammerung mit dem ausgehärteten Beton wird dann auch die eingelagerte Stahlbewehrung auf dem Rohr fixiert.

Erfindungsgemäß beträgt die Höhe des T-Profils mindestens 2 mm, die Höhe des Steges mindestens 1 mm und die Breite des Querteils, welche die Auflagefläche für die Stahlbewehrung bildet, mindestens 2 mm, wobei die Geometrie, Verteilung und der Abstand der einzelnen T-Profile auf dem Umfang des Rohres über ein entsprechend ausgebildetes Extruderwerkzeug gemäß den gestellten Anforderungen frei einstellbar ist.

Die Kunststoffummantelung kann nach einer vorteilhaften Weiterbildung der Erfindung ein- oder mehrlagig ausgebildet sein, wobei als Werkstoffe Thermoplaste, wie z.B. Polyethylen, Polypropylen, Epoxidharz, Polyurethan und/oder Polyamid, einsetzbar sind. Bei einer einlagigen Beschichtung übernimmt diese sowohl die Funktion des Korrosionsschutzes als auch die eines zusätzlichen mechanischen Schutzes und der Abstandshalter. Diese Mehrschichtsysteme können jeweils aus gleichem Material oder aus der Kombination verschiedener Materialien bestehen.

Da bei einer mehrlagigen Ummantelung, beispielsweise aus einem polaren (z.B. Polyamid als äußere Schicht) und einem nicht polaren Kunststoff (z.B. Polyethylen als innenliegende Schicht), kein stoffschlüssiger Verbund zwischen den Schichten erzielt werden kann und damit Relativverschiebungen zwischen den Kunststoffschichten bei der Verlegung möglich sind, ist erfindungsgemäß vorgesehen, dass zwischen den Schichten ein die Haftreibung erhöhender Belag eingebracht wird.

Erfindungsgemäß kann der die Haftreibung der aufeinander liegenden Mantelschichten erhöhende Belag aus auf die Oberfläche der Ummantelungsschicht aufgebrachten und damit stoffschlüssig verbundenen Materialpartikeln bestehen. Die erhöhte Haftreibung wird erfindungsgemäß über eine Erhöhung der Rauigkeit zwischen den Reibpartnern, also z.B. der ersten und der zweiten Ummantelungsschicht, realisiert. Entsprechend könnten z.B. bei einem dreischichtigen Aufbau zwischen der ersten und zweiten und der zweiten und dritten Ummantelungsschicht Materialpartikel zur Erhöhung der Haftreibung eingebracht sein.

In einer vorteilhaften Ausgestaltung der Erfindung sollte beim Aufbringen der Partikel die auf das Rohr aufgebrachte erste Ummantelungsschicht noch nicht erstarrt sein, damit sich die z.B. durch Aufstreuen aufgebrachten Partikel noch stoffschlüssig mit dieser Schicht verbinden können.

Die auf die Oberfläche der ersten Ummantelungsschicht aufgebrachten Partikel können aus beliebigem Material bestehen, bewährt haben sich z.B. Partikel aus Kunststoff, anorganischen Granulaten oder Sand.

Es ist aber auch möglich, diese Partikel mittels eines nachträglich auf die Ummantelungsschicht aufgetragenen Klebers stoffschlüssig zu verbinden, falls dies fertigungstechnisch sinnvoller sein sollte.

Die Materialpartikel selbst sollten gleichmäßig auf der Oberfläche der Ummantelungsschicht verteilt sein, um gleichmäßig über die Kontaktebene der Ummantelungsschichten verteilte Reibungsverhältnisse bezüglich der Haftreibung zu erreichen. Bewährt haben sich Partikel mit Korngrößen von 0,1 bis 3 mm, vorteilhaft jedoch Korngrößen von 0,2 bis 0,5 mm.

In einer Prinzip-Skizze ist die Erfindung am Beispiel einer mit Kunststoff und mit bewehrtem Beton ummantelten Stahlrohrleitung dargestellt.

In der einzigen **Figur** ist in einer Prinzipskizze ein Ausschnitt einer erfindungsgemäß hergestellten Rohrleitung R aus Stahl mit Ballastummantelung dargestellt, bestehend aus einem Stahlrohr 1, dessen Außenoberfläche in diesem Beispiel mit einer zweischichtigen Korrosionsschutzummantelung, bestehend aus einer ersten Schicht 2 und einer zweiten, durch zusätzlich aufgeschmolzenen Materialpartikeln 3 aufgerauten Schicht 4 versehen ist. Das Rohr 1 kann ein längsnahtgeschweißtes, schraubennahtgeschweißtes oder nahtloses Rohr sein.

Erfindungsgemäß wurde dabei die Oberfläche der Polyethylenschicht 2 im Zuge des Aufbringens auf das Rohr 1 mit Partikeln 3, in diesem Fall mit Granulat aus Polyethylen, versehen, die sich mit der heißen noch nicht erstarrten Oberfläche der Polyethylenschicht 2 stoffschlüssig durch Anschmelzen verbunden haben. Die Größe der Partikel 3 ist dabei so angepasst, dass sie nicht größer sind als die Dicke der einzelnen Ummantelungsschichten, sich aber nach dem Anschmelzen und Verbinden noch deutlich von der Oberfläche als Rauigkeitsspitzen hervorheben und somit zum "Verkrallen" mit der nachfolgend aufgebrachten Schicht 4 geeignet sind und dadurch die Haftreibung deutlich erhöhen.

Erfindungsgemäß weist die zweite, außen liegende Schicht 4 des Rohres 1 im Zuge des Extrudierens erzeugte T-förmige Abstandshalter 5 auf, die als Auflagepunkte für die darauf angeordnete Bewehrung 6 dienen und eine ausreichende Überdeckung mit der Betonummantelung 7 gewährleisten. Die Abstandshalter sind gleichmäßig verteilt und in einer solchen Anzahl über dem Umfang des Rohres angeordnet, dass die Bewehrung bei der Montage immer auf den Abstandshaltern aufliegt und damit eine Betonüberdeckung gewährleistet ist. Die Bewehrung wird dabei über die bis in die T-Profile hineinragende ausgehärtete Betonschicht auf dem Rohr fixiert.

**Bezugszeichenliste**

| **Nr.** | **Bezeichnung** |
|---|---|
| R | Rohrleitung mit Ballastummantelung |
| 1 | Rohr |
| 2 | Kunststoffummantelung 1. Schicht |
| 3 | Partikel |
| 4 | Kunststoffummantelung 2. Schicht |
| 5 | Abstandshalter |
| 6 | Bewehrung |
| 7 | Betonummantelung |

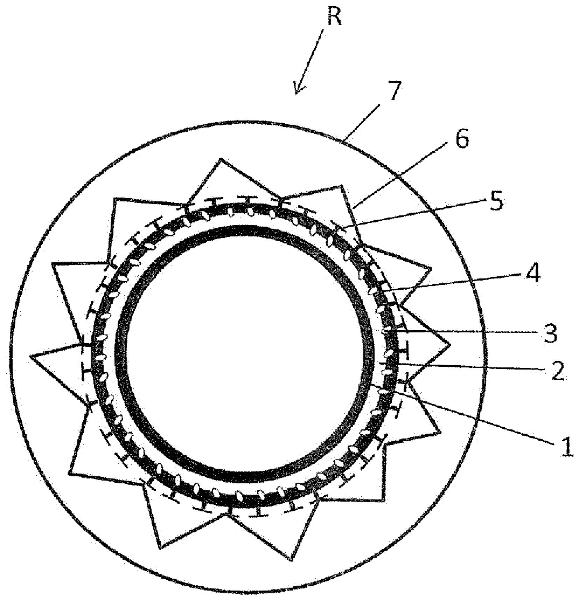

## Patentansprüche

1. Rohrleitung (R) aus Stahl mit Ballastummantelung, insbesondere zur Offshore Verlegung, für den Transport von flüssigen oder gasförmigen Medien, wobei die einzelnen Rohre (1) der Rohrleitung mit einer aufextrudierten ein- oder mehrlagigen thermoplastischen Kunststoffummantelung (2, 4) und einer bewehrten Betonummantelung (7) als Ballast versehen sind, wobei die Bewehrung (6) des Betons als Stahlgeflecht ausgebildet ist, welches sich zur Realisierung einer Betonüberdeckung auf mit auf der Kunststoffummantelung (2, 4) angebrachten Abstandshaltern (5) abstützt,
**dadurch gekennzeichnet,**
**dass** die Abstandshalter (5) nicht als separate Teile auf der Oberfläche der Kunststoffummantelung (2, 4) angebracht sondern als Teil der Kunststoffummantelung (2, 4) ausgebildet sind, welche im Zuge des Extrudierens der Kunststoffummantelung (2, 4) erzeugt wurden.

2. Rohrleitung nach Anspruch 1,
**dadurch gekennzeichnet,**
**dass** die Abstandshalter (5) über dem Umfang der Rohre (1) und deren Länge gleichmäßig verteilt angeordnet sind.

3. Rohrleitung nach Anspruch 1 und 2,
**dadurch gekennzeichnet,**
**dass** die Abstandshalter (5) als T-förmiges Profil mit einem längs oder radial zum Rohr (1) sich erstreckenden Steg und einem als Auflagefläche für die Bewehrung dienenden Querteil ausgebildet sind.

4. Rohleitung nach Anspruch 3,
**dadurch gekennzeichnet,**
**dass** die Höhe des T-förmigen Profils mindestens 2 mm, die Höhe des Steges mindestens 1 mm und die Breite des Querteils, welches die Auflagefläche bildet, mindestens 2 mm beträgt.

5. Rohrleitung nach einem der Ansprüche 1 bis 4,
**dadurch gekennzeichnet,**
**dass** die Kunststoffummantelung ein- oder mehrlagig, bestehend aus Polyethylen, Polypropylen, Epoxidharz, Polyurethan und/oder Polyamid, ausgebildet ist.

6. Rohrleitung nach Anspruch 5,
**dadurch gekennzeichnet,**
**dass** bei einer mehrlagigen Ummantelung aus einem polaren und einem nicht polaren Kunststoff zwischen den Schichten optional ein die Haftreibung der Reibpartner erhöhender Belag vorgesehen ist.

7. Rohrleitung nach Anspruch 6,
**dadurch gekennzeichnet,**
**dass** der Belag aus auf die Oberfläche der Schicht (2) aufgebrachten und damit stoffschlüssig verbundenen Partikeln (3) besteht.

8. Rohrleitung nach Anspruch 6 und 7,
**dadurch gekennzeichnet,**
**dass** der Belag aus auf die Oberfläche der Schicht (2) im heißen Zustand aufgebrachten und damit stoffschlüssig verbundenen Partikeln (3) besteht.

9. Verfahren zur Herstellung einer Rohrleitung aus Stahl mit einer Ballastummantelung, insbesondere zur Offshore Verlegung, für den Transport von flüssigen oder gasförmigen Medien mit einer thermoplastischen Kunststoffummantelung und einer aus bewehrtem Beton bestehenden Ballastummantelung wobei auf die einzelnen Rohre der Rohrleitung zunächst eine ein- oder mehrlagige thermoplastische Kunststoffummantelung aufextrudiert wird, anschließend auf dieser, unter Verwendung von Abstandshaltern, eine darauf sich abstützende Bewehrung aus Stahlgeflecht angeordnet und anschließend das so vorbereitete Rohr mit Beton ummantelt wird,
**dadurch gekennzeichnet,**
**dass** die Abstandhalter im Zuge des Aufextrudierens der Kunststoffummantelung als Teil der Kunststoffummantelung ausgeformt werden.

10. Verfahren nach Anspruch 9,
**dadurch gekennzeichnet,**
**dass** die Abstandshalter und deren geforderte Abmessungen durch entsprechendes Profilieren der Kunststoffummantelung erzeugt werden.

11. Verfahren nach Anspruch 9,
**dadurch gekennzeichnet,**
**dass** mittels der Profilierung T-förmig ausgeformte Abstandshalter erzeugt werden.

12. Verfahren nach den Ansprüchen 9 bis 11,
**dadurch gekennzeichnet,**
**dass** die Bewehrung durch den ausgehärteten Beton mittels der T-förmigen Profilierung auf dem Rohr fixiert wird.

## Claims

1. A pipeline (R) made of steel halving a ballast sheath, in particular for offshore laying, for transporting liquid or gaseous media, wherein the individual pipes (1) of the pipeline are provided with a single- or multi-layer thermoplastic sheath (2, 4) extruded thereon and a reinforced concrete sheath (7) as ballast, wherein the reinforcement (6) of the concrete is formed as a steel mesh which, to realise a concrete covering, is supported on spacers (5) mounted on the plastic sheath (2, 4),
**characterised in that**
the spacers (5) are not mounted on the surface of the plastic sheath (2, 4) as separate parts but are formed as parts of the plastic sheath (2, 4) which were generated during the extrusion of the plastic sheath (2, 4).

2. The pipeline according to Claim 1,
**characterised in that**
the spacers (5) are arranged evenly distributed over the circumference of the pipes (1) and the length thereof.

3. The pipeline according to Claim 1 and 2,
**characterised in that**
the spacers (5) are formed as a T-shaped profile having a web extending longitudinally or radially to the pipe (1) and a transverse part serving as a bearing surface for the reinforcement.

4. The pipeline according to Claim 3,
**characterised in that**
the height of the T-shaped profile is at least 2 mm, the height of the web is at least 1 mm, and the with of the transverse part which forms the bearing surface is at least 2 mm.

5. The pipeline according to one of Claims 1 to 4,
**characterised in that**
the plastic sheath is formed in a single layer or multiple layers, consisting of polyethylene, polypropylene, epoxy resin, polyurethane and/or polyamide.

6. The pipeline according to Claim 5,
**characterised in that**,
with a multi-layer sheath made from a polar and a nonpolar plastic, a coating increasing the static friction of the friction partners is optionally provided between the layers.

7. The pipeline according to Claim 6,
**characterised in that**
the coating consists of particles (3) applied to the surface of the layer (2) and connected thereto with material fit.

8. The pipeline according to Claim 6 and 7,
**characterised in that**
the coating consists of particles (3) applied to the surface of the layer (2) in the hot state and connected thereto with material fit.

9. A method for producing a pipeline made of steel having a ballast sheath, in particular for offshore laying, for transporting liquid or gaseous media, having a thermoplastic sheath and a ballast sheath consisting of reinforced concrete, wherein a single- or multi-layer thermoplastic sheath is firstly extruded onto the individual pipes of the pipeline, then a reinforcement, which is made of steel mesh and supported on spacers, is arranged on the thermoplastic sheath using said spacers, and then the pipe which is prepared in this way is sheathed with concrete,
**characterised in that**
the spacers are formed as part of the plastic sheath during the extrusion of the plastic sheath.

10. The method according to claim 9,
**characterised in that**
the spacers and the required dimensions thereof are generated by profiling the plastic sheath accordingly.

11. The method according to Claim 9,
**characterised in that**
spacers formed in a T shape are generated by means of the profiling.

12. The method according to Claims 9 to 11,
**characterised in that**
the reinforcement, is fired on the pipe by means of the T-shaped profiling by the hardened concrete.

## Revendications

1. Conduite (R) en acier avec une enveloppe de ballast, en particulier pour la pose offshore, pour le transport de milieux liquides ou gazeux, dans laquelle les tubes individuels (1) de la conduite sont pourvus d'une enveloppe en matière plastique (2, 4) thermoplastique à une ou plusieurs couches extrudée et une enveloppe en béton (7) armé comme ballast, dans laquelle l'armature (6) du béton est réalisée comme tresse en acier qui s'appuie pour la réalisation d'un recouvrement en béton sur des éléments d'écartement (5) montés sur l'enveloppe en matière plastique (2, 4),
**caractérisée en ce**
**que** les éléments d'écartement (5) ne sont pas montés comme des parties séparées sur la surface de l'enveloppe en matière plastique (2, 4) mais sont réalisés comme partie de l'enveloppe en matière plastique (2, 4) qui ont été générées au cours de l'extrusion de l'enveloppe en matière plastique (2, 4).

2. Conduite selon la revendication 1,
**caractérisée en ce**
**que** les éléments d'écartement (5) sont agencés en étant répartis uniformément sur la périphérie des tubes (1) et leur longueur.

3. Conduite selon la revendication 1 et 2,
**caractérisée en ce**
**que** les éléments d'écartement (5) sont réalisées comme profil en T avec une nervure s'étendant sur la longueur ou radialement au tube (1) et une partie transversale servant de surface d'appui pour l'armature.

4. Conduite selon la revendication 3,
**caractérisée en ce**
**que** la hauteur du profil en T s'élève à au moins 2 mm, la hauteur de la nervure s'élève à au moins 1 mm et la largeur de la partie transversale qui forme la surface d'appui s'élève à au moins 2 mm.

5. Conduite selon l'une quelconque des revendications 1 à 4,
**caractérisée en ce**
**que** l'enveloppe en matière plastique est réalisée à une ou plusieurs couches, se composant de polyéthylène, de polypropylène, de résine époxy, de polyuréthane et/ou de polyamide.

6. Conduite selon la revendication 5,
**caractérisée en ce**
**qu'**en cas d'enveloppe à plusieurs couches en une matière plastique polaire et une matière plastique non polaire entre les couches un revêtement augmentant le frottement par adhérence des partenaires de frottement est prévu en option.

7. Conduite selon la revendication 6,
**caractérisée en ce**
**que** le revêtement se compose de particules (3) appliquées sur la surface de la couche (2) et raccordées par matière à celle-ci.

8. Conduite selon les revendications 6 et 7,
**caractérisée en ce**
**que** le revêtement se compose de particules (3) appliquées sur la surface de la couche (2) à l'état chaud et raccordées par matière à celle-ci.

9. Procédé de fabrication d'une conduite d'acier avec une enveloppe de ballast, en particulier pour la pose offshore, pour le transport de milieux liquides ou gazeux avec une enveloppe en matière plastique thermoplastique et une enveloppe de ballast se composant de béton armé, dans lequel sur les tubes individuels de la conduite tout d'abord une enveloppe en matière plastique thermoplastique à une ou plusieurs couches est extrudée, puis sur celle-ci, en utilisant des éléments d'écartement, une armature s'appuyant dessus en tresse d'acier est agencée et ensuite le tube ainsi préparé est enveloppé de béton,
**caractérisé en ce**
**que** les éléments d'écartement sont formés au cours de l'extrusion de l'enveloppe en matière plastique comme partie de l'enveloppe en matière plastique.

10. Procédé selon la revendication 9,
**caractérisé en ce**
**que** les éléments d'écartement et leurs dimensions requises sont générés par profilage correspondant de l'enveloppe en matière plastique.

11. Procédé selon la revendication 9,
**caractérisé en ce**
**que** des éléments d'écartement formés en T sont générés par profilage.

12. Procédé selon les revendications 9 à 11,
**caractérisé en ce**
**que** l'armature est fixée par le béton durci au moyen du profilage en T sur le tube.
